# EUROPÄISCHE PATENTANMELDUNG

(11) **EP 1 035 335 A1**
(43) Veröffentlichungstag der Anmeldung: **13.09.2000**
(21) Anmeldenummer: 99810222.2
(22) Anmeldetag: 12.03.1999
(51) Int. Cl.: F16B 13/00

(54) **Dübel**

(71) Anmelder: Stampfli, Karl, 6038 Honau (CH)
(72) Erfinder: Stampfli, Karl, 6038 Honau (CH)
(74) Vertreter: Patentanwälte Breiter + Wiedmer AG

(57) **Zusammenfassung**

Ein Dübel (10) für die Verankerung von Schrauben, Nägeln und dgl. Befestigungselementen besteht aus einem elastischen Werkstoff und weist eine axiale Bohrung (12) zur Aufnahme eines Befestigungselementes (20) auf. Der Dübel erzeugt einen gleichmässigen Anpressdruck und damit eine gute Haftung in einem Bohrloch. Dank dem elastischen Werkstoff eignet sich der Dübel insbesondere auch für die schalldämpfende, schwingungsdämpfende oder wärmeisolierende Verankerung von Befestigungselementen.

## Beschreibung

Die Erfindung betrifft einen Dübel für die Verankerung von Schrauben, Nägeln und dgl. Befestigungselementen.

Herkömmliche Dübel zur Verankerung von Befestigungselementen wie Schrauben in beispielsweise Mauer- oder Holzwerk sind aus mehr oder weniger steifem Kunststoff gefertigt. Die Dübel sind als sogenannte Spreizdübel ausgebildet und weisen zwei durch eine Längsspalt voneinander getrennte Schenkelteile auf. Durch die Spreizung ergibt sich in einem Bohrloch eine verhältnismässig kleine Anpressfläche bei gleichzeitig hohem Anpressdruck. Das auf diese Weise stark beanspruchte Material wie beispielsweise Beton kann unter gewissen Umständen abbröckeln und zu einer Lockerung des Dübels führen.

Es ist auch schon vorgeschlagen worden, einen herkömmlichen Dübel mit einer schalldämpfenden Hülle aus Gummi zu versehen. Dieser Gummiüberzug vermag jedoch die oben erwähnten Nachteile der herkömmlichen Dübel nicht zu beseitigen.

Der Erfindung liegt daher die Aufgabe zugrunde, einen Dübel zu schaffen, mit dem die vorstehend genannten Nachteile vermieden werden können.

Zur erfindungsgemässen Lösung der Aufgabe führt, dass der Dübel aus einem elastischen Werkstoff besteht und eine axiale Bohrung zur Aufnahme eines Befestigungselementes aufweist.

Mit der Verwendung eines elastischen Werkstoffes ergibt sich für den erfindungsgemässen Dübel im Vergleich zu herkömmlichen Dübeln eine grössere Andruckfläche bei kleinerem Anpressdruck. Dadurch können Beschädigungen im Bohrloch, die zum Lockern der Dübel führen können, weitgehend vermieden werden.

Da der Durchmesser der axialen Bohrung im Dübel kleiner gewählt wird als der Durchmesser des Befestigungselementes, wird der elastische Werkstoff im Bohrloch verdrängt und erzeugt dadurch sowohl am Befestigungselement als auch an der Wandung der Bohrung einen gleichmässigen Anpressdruck mit allseitig guter Haftung. Der erfindungsgemässe Dübel ist daher auch zur Verankerung von Nägeln und weiteren mit einem stiftartigen Teil versehenen Befestigungselementen geeignet.

Mit der Verwendung eines elastischen Werkstoffes ergibt sich zwischen einem Befestigungselement und einem Bohrloch eine Zwischenlage mit schalldämpfenden, schwingungsdämpfenden und wärmeisolierenden Eigenschaften.

Durch die elastische Lagerung des Befestigungselementes im Dübel kann sich das Befestigungselement in gewissen Grenzen bewegen, wodurch Toleranzen und unterschiedliche Wärmeausdehnungen kompensiert werden.

Weitere Vorteile des erfindungsgemässen Dübels im Vergleich zu herkömmlichen Produkten ergeben sich direkt aus den Eigenschaften des elastischen Werkstoffes. So eignet sich der erfindungsgemässe Dübel insbesondere auch in Nassbereichen und dichtet durch die Materialverdrängung selbsttätig auch im Unterwasserbereich. Da keine Spreizung auftritt, können auch Rissbildungen an beispielsweise Brüstungen und keramischen Oberflächen , wie sie etwa durch eindringendes Wasser unter Frostbedingungen zu beobachten sind, verhindert werden. Durch die elastische Verbindung eignet sich der Dübel auch zur Verminderung der Schwingungsübertragung von Motoren in Geräten wie Abwaschmaschinen und Kühlschränken.

Der erfindungsgemässe Dübel ermöglicht eine elastische, in Axial- und Querrichtung federnde Befestigung. Durch das dauerelastische Verhalten des Dübels ist auch nach längerer Einbauzeit keine Lockerung zu befürchten. Der Dübel ist praktisch für den Einsatz in jedem Material anwendbar. Zu diesen Materialien gehören u.a. Holz, Naturstein, Beton, Backstein, Überzüge, Glas, Metall, Kunststoff und Keramik. Falls ein Dübel einmal ausreisst, bleiben keine Schäden wie beispielsweise Ausrisse zurück. Der Dübel eignet sich in besonderem Masse auch für den Einsatz in thermisch getrennten Konstruktionen zur Verhinderung von Wärmebrücken. Ein Beispiel für derartige Konstruktionen sind beispielsweise Metall-Glas-Kontruktionen, wie sie etwa bei Wintergärten Anwendung finden.

Zweckmässigerweise ist der Dübel im wesentliche zylindrisch mit kreisförmigem Durchmesser ausgebildet. Die axiale Bohrung muss nicht notwendigerweise durchgehend sein. Bevorzugt wird jedoch eine durchgehende Bohrung, so dass der Dübel einen Hohlzylinder bildet.

Der Dübel kann an seinem der Aufnahmeöffnung für ein Befestigungselement abgewandten Ende konisch zulaufend und/oder abgerundet ausgebildet sein.

Insbesondere bei Spezialanwendungen kann es zweckmässig sein, wenn der Dübel an dem zur Aufnahme eines Befestigungselementes vorgesehenen Ende kragenartig erweitert ist.

Zur Vermeidung einer anfänglichen Drehbewegung des Dübels in einem Bohrloch kann er an seiner Oberfläche in Richtung der Dübelachse verlaufende Rippen aufweisen.

Zur Veränderung der anfänglichen Drehbewegung und eines zu tiefen Setzens des Dübels kann dieser im Bereich des zur Aufnahme eines Befestigungselementes vorgesehenen Endes eine von der Oberfläche abragende Erhebung aufweisen. Bei einer bevorzugten Ausführungsform des erfindungsgemässen Dübels ist die Erhebung das freie Ende eines quer zur Dübelachse eingesetzten Stiftes, insbesondere eines Stahlstiftes.

Zur Erleichterung der Einführung eines Befestigungselementes in den Dübel kann die axiale Bohrung im Bereich des zur Aufnahme eines Befestigungselementes vorgesehenen Elementes erweitert ausgebildet sein.

Als elastischer Werkstoff für den Dübel eignen sich gummiartige Materialien wie beispielsweise Naturkautschuk.

Um eine besonders gute Haftung zwischen Befestigungselement und Dübel zu erzielen, kann zusätzlich vorgesehen sein, dass die axiale Bohrung mit einem Klebstoff gefüllt ist. Da nach dem Einfüllen des Klebstoffs in die Bohrung der Klebstoff nur an den beiden Öffnungen der Bohrungen trocknet und demzufolge die Bohrung luftdicht verschliesst, bleibt der Klebstoff in der Bohrung weiterhin flüssig oder pastös.

Zur weiteren Verbesserung der Haftung zwischen Dübel und Bohrloch kann auf die Oberfläche des Dübels ein Klebstoff aufgetragen sein. Dieser Klebstoff wird erst beim Befeuchten mit Wasser klebfähig und dient zugleich als Gleitmittel beim Setzen des Dübels.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: einen erfindungsgemässen Dübel;
- Fig. 2: einen Dübel nach dem Stand der Technik mit eingesetzter Schraube in einem Bohrloch;
- Fig. 3: einen erfindungsgemässen Dübel mit eingesetzter Schraube in einem Bohrloch;
- Fig. 4: eine weitere Anwendung eines erfindungsgemässen Dübels.

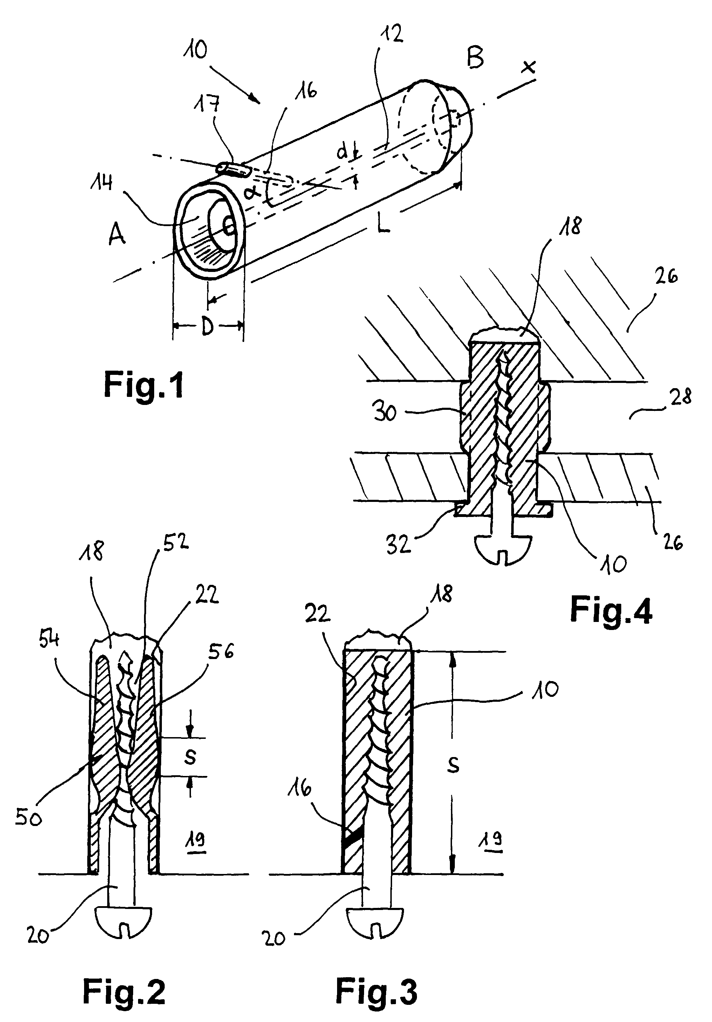

Ein in Fig. 1 gezeigter Dübel 10 aus Gummi mit einer Länge L von beispielsweise 35 mm und einem Durchmesser D von beispielsweise 8 mm ist als Hohlzylinder kreisförmigen Durchmessers mit einer in der Dübelachse x angeordneten axialen Bohrung 12 mit einem Durchmesser d von beispielsweise 2 mm ausgebildet. Im Bereich des zur Aufnahme eines Befestigungselementes vorgesehenen Endes A ist die Bohrung 12 unter Bildung eines Aufnahmeraumes 14 als Einführungshilfe für ein in den Dübel 10 einzusetzendes Befestigungselement erweitert. An seinem der Aufnahmeöffnung für das Befestigungselement abgewandte Ende B ist der Dübel 10 konisch zulaufend ausgebildet.

Im Bereich des zur Aufnahme eines Befestigungselementes vorgesehenen Endes A ist quer zur Dübelachse und in einem spitzen Winkel α zu dieser ein seitlich aus dem Dübel herausragender Stahlstift 16 eingesetzt. Dieser Stahlstift 16 verhindert eine Drehbewegung des Dübels beim Einsetzen eines Befestigungselementes und hemmt gleichzeitig ein zu tiefes Setzen des Dübels.

Die Vorteile eines erfindungsgemässen Dübels gegenüber einem herkömmlichen Dübel nach dem Stand der Technik ergeben sich ohne weiteres durch Vergleich der Fig. 2 und 3.

Der gemäss Fig. 2 in ein Bohrloch 18 in einer Mauer 19 aus beispielsweise Beton eingesetzte Dübel 50 nach dem Stand der Technik weist zwei durch eine Spaltöffnung 52 voneinander getrennte Schenkelteile 54, 56 auf. Durch das Eindrehen einer Schraube 20 in den Dübel 50 werden die beiden Schenkelteile 54, 56 gespreizt und hierbei gegen die Wandung 22 des Bohrloches gedrückt. Die effektive Andruckfläche beschränkt sich als Folge der Konstruktion der Dübel 50 nach dem Stand der Technik über eine im Vergleich zur Dübellänge eng begrenzte Strecke s. Daraus ergibt sich ein starker lokaler Anpressdruck im Bohrloch 18, was beispielsweise zum Abbröckeln von Material wie z.B. Beton führen kann. Diese Verletzungen des Materials an der Innenseite des Bohrloches 18 führt zu einer Verschlechterung der Haftung und damit zur Lockerung des Dübels 50 im Bohrloch 18. Im Gegensatz hierzu zeigt Fig. 3, dass beim Einsetzen der Schraube 20 in einen erfindungsgemässen Dübel 10 der gummielastische Werkstoff als Folge des gegenüber dem Durchmesser d der Bohrung 12 des Dübels 10 grösseren Durchmessers der Schraube 20 verdrängt und einerseits in die Schraubenwindungen 24 und andererseits gegen die Wandung 22 des Bohrloches 18 gedrückt wird. Durch die elastischen Eigenschaften des Werkstoffes ergibt sich zwischen dem Dübel 10 und der Wandung 22 des Bohrloches 18 ein gleichmässiger Anpressdruck, der sich über eine Länge s erstreckt, die im wesentlichen der Dübellänge L entspricht. Dies führt insgesamt zu einer mindestens ebenso starken Verankerung der Schraube 20 im Vergleich zur Befestigung mit einem Dübel 50 nach dem Stand der Technik.

Bei der in Fig. 4 dargestellten Anordnung ist der Dübel 10 in einen Backstein 26 eingesetzt und überbrückt hierbei einen durch eine Hohlkammer gebildeten Zwischenraum 28. Der elastische Werkstoff wird teilweise auch in diesem Zwischenraum 28 gedrückt und bildet hierbei einen das Ausreissen des Dübels 10 verhindernden Sperrwulst 30. An dem zur Aufnahme der Schraube 20 vorgesehenen Ende A ist der Dübel 10 zu einem Kragen 32 ausgeformt. Dieser kann beispielsweise das Eindringen von Wasser in das Bohrloch 18 zusätzlich vermindern und bildet gleichzeitig eine schwingungs- und schalldämpfende Auflage für einen zu befestigenden Gegenstand.

## Patentansprüche

1. Dübel für die Verankerung von Schrauben, Nägeln und dgl. Befestigungselementen,
dadurch gekennzeichnet, dass
der Dübel (10) aus einem elastischen Werkstoff besteht und eine axiale Bohrung (12) zu Aufnahme eines Befestigungselementes (20) aufweist.

2. Dübel nach Anspruch 1, dadurch gekennzeichnet, dass er im wesentlichen zylindrisch mit kreisförmigem Durchmesser (D) ausgebildet ist.

3. Dübel nach Anspruch 1 oder 2, dadurch gekennzeichnet, dass die axiale Bohrung (12) durchgehend ist und der Dübel (10) einen Hohlzylinder bildet.

4. Dübel nach einem der Ansprüche 1 bis 3, dadurch gekennzeichnet, dass er an seinem der Aufnahmeöffnung für ein Befestigungselement (20) abgewandten Ende (B) konisch zulaufend und/oder abgerundet ausgebildet ist.

5. Dübel nach einem der Ansprüche 1 bis 4, dadurch gekennzeichnet, dass er an dem zur Aufnahme eines Befestigungselementes (20) vorgesehenen Ende (A) kragenartig erweitert ist.

6. Dübel nach einem der Ansprüche 1 bis 5, dadurch gekennzeichnet, dass er an seiner Oberfläche in Richtung der Dübelachse (x) verlaufende Rippen aufweist.

7. Dübel nach einem der Ansprüche 1 bis 6, dadurch gekennzeichnet, dass er im Bereich des zur Aufnahme eines Befestigungselementes (20) vorgesehenen Endes (A) eine von der Oberfläche abragende Erhebung (17) aufweist.

8. Dübel nach Anspruch 7, dadurch gekennzeichnet, dass die Erhebung (17) das freie Ende eines quer zur Dübelachse (x) eingesetzten Stiftes (16), insbesondere eines Stahlstiftes, ist.

9. Dübel nach einem der Ansprüche 1 bis 8, dadurch gekennzeichnet, dass die axiale Bohrung (12) als Einführungshilfe für ein Befestigungselement (20) im Bereich des zur Aufnahme eines Befestigungselementes vorgesehenen Endes (A) erweitert ist.

10. Dübel nach einem der Ansprüche 1 bis 9, dadurch gekennzeichnet, dass er aus Naturkautschuk oder dgl. gummiartigem Material besteht.

11. Dübel nach einem der Ansprüche 1 bis 10, dadurch gekennzeichnet, dass die axiale Bohrung (12) mit einem Klebstoff gefüllt und/oder dass die Oberfläche des Dübels (10) mit einem Klebstoff beschichtet ist.
